# EUROPEAN PATENT APPLICATION

(11) **EP 4 765 554 A1**
(43) Date of publication of application: **24.06.2026**
(21) Application number: 24220826.2
(22) Date of filing: 17.12.2024
(51) Int. Cl.: H02J 7/00

(54) **METHOD FOR CALIBRATING A STATE OF CHARGE (SOC) AND/OR RESETTING A PREDICTED STATE OF CHARGE (SOC) OF AN ENERGY SOURCE UNIT DURING A CHARGE OR DISCHARGE EVENT**

(71) Applicant: Rimac Energy LLC, 10010 Zagreb (HR)
(72) Inventor: Dilov, Wasim Sarwar, 10000 Zagreb (HR)
(74) Representative: Sonnenberg Harrison Partnerschaft mbB

(57) **Abstract**

A method for calibrating a state of charge (SOC) and/or resetting a predicted state of charge (SOC) of an energy source unit during a charge or discharge event is described. The energy source unit comprises at least two sub-units. The method comprises the following steps: providing a SOC of at least one of the at least two sub-units, during a charge or discharge event, selectively charging or discharging the at least one of the at least two sub-units until a predefined charging or discharging criterion is met, determining a SOC of the at least one of the at least two sub-units that is reached when the predefined charging or discharging criterion is met, the determined SOC being a reset SOC, resetting the provided SOC of the at least one of the at least two sub-units based on the reset SOC, when the predefined charging or discharging criterion is met, excluding the at least one of the at least two sub-units from the charge or discharge event for which the predefined charging or discharging criterion is met, and charging or discharging at least another one of the at least two sub-units until a predefined SOC is met.

## Description

### FIELD OF THE INVENTION

The present invention relates to a method for calibrating a state of charge (SOC) and/or resetting a predicted state of charge (SOC) of an energy source unit during a charge or discharge event. The present invention also relates to an energy source system for calibrating a SOC and/or resetting a predicted SOC. The present invention further relates to a processing unit or an energy source controller or a sub-unit controller or a cluster controller or a stack controller. The present invention further relates to a computer program product. The present invention further relates to a computer-readable storage medium. The present invention further relates to a stationary energy storage system or a vehicle comprising an energy source system for calibrating a SOC and/or resetting a predicted SOC.

### BACKGROUND OF THE INVENTION

Advancements in electric components, energy storage technologies, and energy storage management systems result in improved stationary energy storage systems as well as drive the electrification of vehicles. One goal to further improve the properties of electric systems, such as a stationary energy storage system or electric vehicles, comprises the optimization of the management system. An optimized management system for stationary energy storage systems or batteries contributes to a longer lifetime/lifespan and to an increased number of charging and discharging cycles, resulting in a higher sustainability.

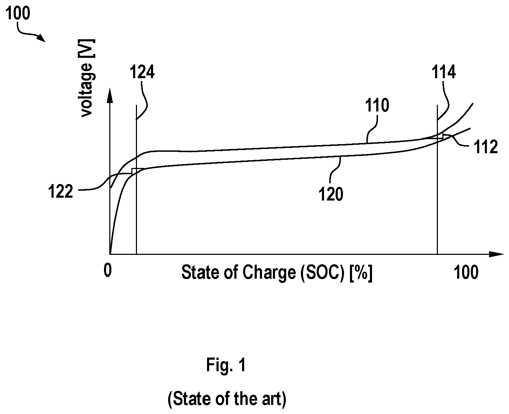

FIG. 1 shows a schematic illustration of a charging-discharging-diagram 100 of a battery. The battery may be, for example, but not limited to, a Lithium Iron Phosphate cell (LFP cell). The charging-discharging-diagram 100 is considered being state of the art and used herein for explanatory purposes only. The charging-discharging-diagram 100 shows a typical charging and discharging curve for such batteries.

The charging-discharging-diagram 100 shows a state of charge (SOC) in percentage on the x-axis and depicts voltage in Volt (V) on the y-axis. A SOC of 0% usually relates to a battery with (almost) no stored electrical energy, often referred to as an "empty" battery, wherein a SOC of 100% usually corresponds to an electrical energy storage reaching the maximum battery capacity, i.e., a "full" battery. It is worth noting that the SOC of 0% as well as the SOC of 100% may vary due to deviations occurring in the manufacturing process.

FIG.1 further illustrates a charging curve 110. The charging curve 110 experiences a steep increase in a first charging range which is close to the 0% SOC. The first charging range may be, for example, but not limited to, in a range of 0 to 5% SOC. When charging further, the charging curve 110 continues relatively straight/flat while exhibiting a slight increase in voltage over a second charging range, meaning that the change in voltage is small over the second charging range. The second charging range usually covers a relatively wide SOC range, for instance, from approximately 5 to 95% SOC. Over a third charging range extending, for example, from approximately 95 to 100% SOC, the voltage usually increases significantly.

FIG.1 also illustrates a discharging curve 120. The progression of the discharging curve 120 is similar but not identical to the charging curve 110 which is usually referred to as a hysteresis. When reading the discharging curve 120 from 100% SOC to 0% SOC, the discharging curve 120 exhibits a decrease in voltage in a first discharging range which is similar to the third charging range of the charging curve 110. The first discharging range is followed by a relatively straight but slightly decreasing voltage line over a second discharging range which is similar to the second charging range of the charging curve 110. A steep decrease in voltage usually occurs in a third discharging range being similar to the first charging range of the charging curve 110.

In conclusion, the charging curve 110 as well as the discharging curve 120 are both characterized by a large change in voltage as a function of SOC at a lower end of the SOC (in a first region close to 0% SOC) and an upper end of the SOC (in a second region close to 100% SOC). The large change in voltage as a function of SOC corresponds to a large deviation in voltage over a deviation of SOC (large dV/dSOC). The lower end of the SOC may be indicated by a minimum state-of-charge value 124 at which the large dV/dSOC occurs, for example, regarding the discharging curve 120. The upper end of the SOC may be indicated by a maximum state-of-charge value 114 at which the large dV/dSOC occurs, for example, regarding the charging curve 110. The maximum state-of-charge value 114 and/or the minimum state-of-charge value 124 are often used for calibration of the SOC.

For current batteries, for instance, in the stationary storage field, the relative balance of the anode/cathode of the battery results in a maximum state-of-charge value 114 of 97% SOC or 99.5% SOC or higher.

However, one problem with current batteries is that excess degradation of the battery occurs when charging the battery to the full battery capacity. SOC values of 99.5% SOC or higher are therefore usually avoided for increasing the lifespan / lifetime of the battery. Additionally, the minimum state-of-charge value 124 is often determined at 3 to 5% SOC (corresponding to 97 to 95% depth of discharge (DoD)). When discharging the battery to a point where (almost) no battery capacity remains, excess degradation of the battery also occurs. Hence, avoiding discharging below the minimum state-of-charge value 124 reduces excess degradation of the battery and prevents power limitations.

Determining/measuring the current (correct) SOC of the battery is however challenging. For this, highly accurate voltage sensing and/or highly accurate current measurements are required. When using a modular multi-level converter, for instance, the modular multi-level converter may induce current ripple resulting in a noisy voltage signal such that the noise is greater than the intended signal to be measured. Other factors also affect the determination of the SOC, such as the quality of the employed sensor, the above-mentioned hysteresis between charging and discharging, and changing of an open-circuit voltage at a given SOC over time due to aging of the battery. Therefore, traditional techniques for estimating the SOC such as coulomb counting (i.e., calculating the SOC by measuring the battery current and integrating the current over time) with open-circuit voltage lookup may result in a poor SOC accuracy with large SOC errors.

In conclusion, current techniques for estimating the SOC cannot provide an SOC with sufficient accuracy over a long period of time. Instead, an SOC drift is often observed. This circumstance is inconvenient for users, as the provided SOC of the battery does not correspond to the actual capacity of the battery, affecting the use case/application of the battery or, more generally, of the electrical energy storage. This circumstance also applies, for example, to stationary energy storage systems. For example, an incorrectly measured SOC is disadvantageous, especially for electric vehicles, since it affects, for example, the validity of estimating a remaining travel distance of the electric vehicle before recharging the battery.

The prior art shows an absence of an automatic, flexible, accurate and simple method for calibrating and/or resetting the SOC of a stationary energy storage system, a battery and/or a battery system.

Against this background, it is an objective of the present invention to provide an improved method for calibrating a SOC and/or resetting a predicted SOC of an energy source unit during a charge or discharge event, an energy source system for such method, and a stationary energy storage system or a vehicle comprising the energy source system using the improved method.

### SUMMARY OF THE INVENTION

This objective is achieved by a method having the features of claim 1. This objective is further achieved by an energy source system having the features of claim 12. This objective is further achieved by a processing unit or an energy source controller or a sub-unit controller or a cluster controller or a stack controller having the features of claim 13. This objective is further achieved by a stationary energy storage system or a vehicle having the features of claim 14. This objective is further achieved by a computer program product providing the features of claim 15. This objective is further achieved by a computer-readable storage medium having the features of claim 16.

A method for calibrating a state of charge (SOC) and/or resetting a predicted state of charge (SOC) of an energy source unit during a charge or discharge event is disclosed in the present document. In accordance with a first aspect, the energy source unit comprises at least two sub-units. The method comprises the following steps: A first step comprises providing a SOC of at least one of the at least two sub-units. A second step comprises, during a charge or discharge event, selectively charging or discharging the at least one of the at least two sub-units until a predefined charging or discharging criterion is met. A third step comprises determining a SOC of the at least one of the at least two sub-units that is reached when the predefined charging or discharging criterion is met. The determined SOC is a reset SOC. A fourth step comprises resetting the provided SOC of the at least one of the at least two sub-units based on the reset SOC, when the predefined charging or discharging criterion is met. A fifth step comprises excluding the at least one of the at least two sub-units from the charge or discharge event for which the predefined charging or discharging criterion is met. A sixth step comprises charging or discharging at least another one of the at least two sub-units until a predefined SOC is met.

The method enables flexibly calibrating the SOC and/or resetting the predicted SOC of the energy source unit comprising the at least two sub-units, when needed and/or desired. The method enables (re-)calibrating a routine for obtaining the SOC of the energy source unit comprising the at least two sub-units, when needed and/or desired. The method minimizes the time/duration of the energy source unit spent at high/low SOC level, preventing (additional) degradation and resulting in an increased lifetime. The method also helps to distinguish between apparent capacity loss and real capacity loss, whereas the apparent capacity loss arises from insufficient SOC accuracy and/or SOC measurement drift. The method hence contributes to reducing this apparent capacity loss.

The term "state of charge (SOC)" refers to a current energy level or remaining capacity of a rechargeable energy source unit, expressed as a percentage of its full capacity. The SOC indicates the amount of electric charge left in the energy source unit, helping to manage energy usage and prevent overcharging or deep discharging.

The term "energy source unit" refers to an entity/component that stores and/or provides electrical energy to other electrical devices. Preferably, the energy source unit may be a stationary energy storage system. In another aspect, the energy source unit may comprise only a modular part of the stationary energy storage system, for example, a stationary energy storage module. The energy source unit may also be, for example, but not limited to, a battery. In another aspect, the energy source unit may be a battery of an electric vehicle. In yet another aspect, the energy source unit may comprise only a modular part of the battery of the electric vehicle, for example, a battery module.

The term "sub-unit" refers to a sub-entity/sub-component of the energy source unit. Preferably, the sub-unit may comprise the stationary energy storage module of the stationary energy storage system. In another aspect, the stationary energy storage system comprises eight stationary energy storage modules. In yet another aspect, the stationary energy storage system comprises twelve stationary energy storage modules. In yet another aspect, the stationary energy storage system comprises sixteen stationary energy storage modules. However, the number of stationary energy storage modules is not limited to the number eight, twelve, or sixteen, and, therefore, the number of stationary energy storage modules may be varied. The sub-unit may also comprise the battery module of the battery of the electric vehicle. In another aspect, the battery of the electric vehicle comprises eight battery modules. In yet another aspect, the battery of the electric vehicle comprises twelve battery modules. In yet another aspect, the battery of the electric vehicle comprises sixteen battery modules. However, the number of battery modules is not limited to the number eight, twelve, or sixteen, and, therefore, the number of battery modules may be varied. In yet another aspect, the sub-unit may comprise an elementary unit capable of storing and providing electrical energy/power, i.e., an energy source element.

In accordance with another aspect, the method may further comprise a seventh step. The seventh step comprises, during the same or another charge or discharge event, selectively discharging or charging the at least one of the at least two sub-units for achieving a balanced SOC between the at least two sub-units. The same or the another charge or discharge event is preferably subsequent to the sixth step of the charging or discharging at least another one of the at least two sub-units until a predefined SOC is met.

Achieving the balanced SOC results in more similar charging/discharging properties of the at least two sub-units. This can lead to better resource utilization and extends the lifespan.

In accordance with another aspect, the method may further comprise repeating steps one to six for the at least another one of the at least two sub-units, preferably for successively iterating over the at least two sub-units to calibrate and/or reset each one of a provided SOC of the at least two sub-units, respectively. The repeating is executed based on a repeating condition. The repeating condition preferably comprises a predefined number of completed charge and/or discharge events. The repeating condition more preferably comprises a predefined electric charge throughput and/or a predefined electrical energy throughput.

Repeating steps one to six allows to successively iterate over the at least two sub-units and enables minimizing the time/duration of the at least two sub-units spent at high/low SOC level, preventing (additional) degradation.

In accordance with another aspect, the method may further comprise repeating steps one to seven for the at least another one of the at least two sub-units, preferably for successively iterating over the at least two sub-units to calibrate and/or reset each one of a provided SOC of the at least two sub-units, respectively. The repeating is executed based on a repeating condition. The repeating condition preferably comprises a predefined number of completed charge and/or discharge events. The repeating condition more preferably comprises a predefined electric charge throughput and/or a predefined electrical energy throughput.

Repeating steps one to seven allows to successively iterate over the at least two sub-units and enables minimizing the time/duration of the at least two sub-units spent at high/low SOC level preventing (additional) degradation as well as achieving the balanced SOC resulting in similar charging/discharging properties of the at least two sub-units leading to better resource utilization and extends the lifespan.

In accordance with another aspect, the resetting (fourth step) is performed subsequent to the charging or discharging (sixth step).

Performing the resetting subsequent to the charging or discharging provides a higher flexibility of the method.

In accordance with another aspect, the providing (first step) comprises estimating or predicting the provided SOC of the at least one of the at least two sub-units by a prediction algorithm based on at least one of a measuring voltage, a measuring electric current, a coulomb counting, a temperature measuring, and a control loop. The control loop preferably comprises an adaptive Kalman filter. The use of an adaptive Kalman filter in a control loop enhances the accuracy, adaptability, and/or robustness of state estimation, leading to better overall system performance in dynamic and noisy environments.

Providing the SOC makes it possible to make statements about, for example, the current energy level or remaining capacity of the at least two sub-units.

The term "prediction algorithm" refers to a computational routine using input data to estimate or predict a SOC of an energy source unit and/or a sub-unit. The prediction algorithm may use analytical models, statistical techniques, and/or machine learning to analyze input data and, thus, enabling estimations or predictions of the SOC.

In accordance with another aspect, the excluding (fifth step) comprises excluding the at least one of the at least two sub-units from the charge or discharge event, preferably immediately, after meeting the predefined charging or discharging criterion.

The excluding after meeting the predefined charging or discharging criterion minimizes the time/duration of the at least one of the at least two sub-units spent at high/low SOC level, preventing (additional) degradation. The excluding immediately after meeting the predefined charging or discharging criterion further minimizes the time/duration of the at least one of the at least two sub-units spent at high/low SOC level, preventing (additional) degradation.

In accordance with another aspect, the predefined charging or discharging criterion comprises at least one of a voltage threshold, a voltage gradient condition, a threshold regarding deviation of voltage over deviation of state of charge, a current threshold, a current gradient condition, and a threshold regarding deviation of charge over deviation of voltage.

Using at least one of the predefined charging or discharging criterion enables an easy and simple derivation of a maximum state-of-charge value and/or a minimum state-of-charge value.

In accordance with another aspect, the at least two sub-units comprise at least two energy source modules, each of the at least two energy source modules having a plurality of energy source elements, and/or the at least two sub-units comprise at least two energy source elements.

Dividing the energy source unit into sub-units enables implementation of a management system on different levels, resulting in improved properties of the overall system.

The term "energy source module" refers to a modular part of the energy source unit. Preferably, the energy source module may be the stationary energy storage module. The energy source module may also be the battery module.

The term "energy source element" refers to an elementary unit capable of storing and providing electrical energy/power. Preferably, the energy source element may be a battery cell. In another aspect, the battery cell is an electrochemical cell, for example, but not limited to, a Lithium Iron Phosphate cell (LFP cell). In a further aspect, the energy source element may be one of a (super)capacitor, a photovoltaic cell, electrochemical energy storage, a fuel cell, or any other energy storage device capable of storing and providing electric power.

In accordance with another aspect, the method is initiated based on an initiation condition. The initiation condition preferably comprises a predefined number of completed charge and/or discharge events. The initiation condition more preferably comprises a predefined electric charge throughput and/or a predefined electrical energy throughput.

Using the initiation conditions enables a flexible and adapted use of the method. It must be mentioned that also other initiation conditions may be chosen.

In accordance with another aspect, the energy source unit comprises at least one power converter module. The at least one power converter module comprises at least two switching elements. The method may further comprise selectively switching the at least one of the at least two sub-units regarding the at least another one of the at least two sub-units, preferably during the charge or discharge event, for selectively charging or discharging the at least one of the at least two sub-units.

Selectively switching enables selectively charging or discharging the at least one of the at least two sub-units. This achieves the balanced SOC resulting in similar charging/discharging properties of the at least two sub-units leading to better resource utilization and extends the lifespan.

The term "power converter module" preferably refers to a module within a multilevel converter that facilitates the conversion and/or control of electric power. It includes circuitry, such as switching elements, to manipulate the flow of electrical energy and regulate voltage and current levels.

The term "switching element" preferably refers to electronic devices, such as transistors or thyristors, used within the power converter module to control the flow of electric current. These elements can be turned on or off selectively to enable or interrupt the current path and facilitate the desired energy transfer or conversion.

An energy source system for calibrating a state of charge (SOC) and/or resetting a predicted state of charge (SOC) is disclosed in the present document. In accordance with another aspect, the energy source system comprises: an energy source unit, at least one power converter module, and an energy source controller. The energy source unit comprises at least two sub-units. The at least one power converter module comprises at least two switching elements. The at least two switching elements are configured for selectively switching each one of the at least two sub-units at least temporarily in series positive and/or in series negative and/or in a positive bypass state and/or in a negative bypass state and/or in a parallel configuration state. The energy source controller for controlling a charge and/or discharge event of the at least two sub-units is configured to perform the steps of providing a SOC of at least one of the at least two sub-units, during a charge or discharge event, by the at least two switching elements, selectively charging or discharging the at least one of the at least two sub-units until a predefined charging or discharging criterion is met, determining a SOC of the at least one of the at least two sub-units that is reached when the predefined charging or discharging criterion is met, the determined SOC being a reset SOC, resetting the provided SOC of the at least one of the at least two sub-units based on the reset SOC, when the predefined charging or discharging criterion is met, excluding, by the at least two switching elements, the at least one of the at least two sub-units from the charge or discharge event for which the predefined charging or discharging criterion is met, and charging or discharging, by the at least two switching elements, at least another one of the at least two sub-units until a predefined SOC is met.

The advantage of the energy source system is to calibrate the SOC and/or reset the predicted SOC of the energy source unit comprising the at least two sub-units when needed and/or desired. In addition, the energy source controller of the energy source system is capable of automatically performing the above-described steps to calibrate the SOC and/or reset the predicted SOC resulting in a minimized time/duration of the energy source unit spent at high/low SOC level preventing (additional) degradation.

The term "energy source system" refers to a system of components that generates, stores, distributes, or provides energy from a source. Preferably, the energy source system may be a stationary energy storage system or an electric vehicle.

The term "energy source controller" refers to an electronic device that manages and regulates the flow of energy within a system. The energy source controller may be, for example, a rack controller. In a further aspect, the energy source controller may be one of a stack controller, a sub-unit controller, or a cluster controller. In a yet further aspect, the sub-unit controller may be a stationary energy storage management system, a cluster controller, or a battery management system (BMS).

A processing unit or an energy source controller or a sub-unit controller or a cluster controller or a stack controller is disclosed in the present document. In accordance with another aspect, the processing unit or the energy source controller or the sub-unit controller or the cluster controller or the stack controller is configured to perform the method according to any one of the preceding aspects.

The processing unit or the energy source controller or the sub-unit controller or the cluster controller or the stack controller enable automatic execution of the method for calibrating a state of charge (SOC) and/or resetting a predicted state of charge (SOC) of an energy source unit during a charge or discharge event resulting in a minimized time/duration of the energy source unit spent at high/low SOC level preventing (additional) degradation.

A stationary energy storage system or a vehicle is disclosed in the present document. In accordance with another aspect, the stationary energy storage system or the vehicle comprises an energy source system for calibrating a state of charge (SOC) and/or resetting a predicted state of charge (SOC) according to any one of the preceding aspects and/or a processing unit or an energy source controller or a sub-unit controller or a cluster controller or a stack controller according to any one of the preceding aspects.

Using the stationary energy storage system or the vehicle comprising the energy source system and the processing unit or the energy source controller or the sub-unit controller or the cluster controller or the stack controller enables automatic execution of the method for calibrating the SOC and/or resetting the predicted SOC of the energy source unit during a charge or discharge event resulting in a minimized time/duration of the energy source unit spent at high/low SOC level preventing (additional) degradation. This is especially advantageous for the stationary energy storage system or the electric vehicle since it is possible to increase the lifespan of the energy source unit, making the stationary energy storage system or the electric vehicle more sustainable.

The term "stationary energy storage system" refers to an entity/component that stores and/or provides electrical energy to other electrical devices at a fixed location.

The term "vehicle" refers to a mechanical and/or powered means of transportation designed to carry people and/or goods. The term "vehicle" refers in the present document preferably to cars, even more preferably to high-performance cars, and most preferably to high-performance electric cars. Other vehicles, however, such as, but not limited to, utility vehicles, aircrafts, or watercrafts may also be associated with the term "vehicle".

A computer program product is disclosed in the present document. In accordance with another aspect, the computer program product comprises instructions which, when the program is executed by a processing unit, cause the processing unit to perform the method according to any one of the preceding aspects.

Using the computer program product enables implementation of the method for automatic execution by the processing unit.

A computer-readable storage medium is disclosed in the present document. In accordance with another aspect, the computer-readable storage medium has stored thereon the computer program product of any one of the preceding aspects.

Using the computer-readable storage medium enables flexible storage of the computer program product.

Advantageous aspects of the present disclosure are the subject-matter of the dependent claims. Any and all combinations of at least two features disclosed in the description, the claims, and/or the figures fall within the scope of the present disclosure. Naturally, the explanations given in connection with the method equivalently relate to the energy source system and/or the processing unit or the energy source controller or the sub-unit controller or the cluster controller or the stack controller and/or the stationary energy storage system and/or the vehicle and/or the computer program product and/or the computer-readable storage medium according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features and/or aspects that are described above or below with respect to the exemplary aspects and/or aspects. In this case, a person skilled in the art will also add individual aspects as improvements or supplementation to the respective basic form of the invention.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

### BRIEF DESCRIPTION OF THE FIGURES

FIG. 1 shows a schematic illustration of a charging-discharging-diagram of a battery (state of the art).
FIG. 2 shows a schematic illustration of an energy source system according to a first aspect.
FIG. 3 shows a flowchart of a method for calibrating a state of charge (SOC) and/or resetting a predicted state of charge (SOC) of an energy source unit according to another aspect.

### DETAILED DESCRIPTION OF THE INVENTION

The invention will now be described based on the figures. It will be understood that the aspects of the invention described herein are only examples and do not limit the protective scope of the claims in any way. The invention is defined by the claims and their equivalents. It will be understood that features of one aspect of the invention can be combined with a feature of a different aspect or aspects of the invention.

Unless indicated to the contrary, elements that are the same or functionally the same have been given the same reference signs in the figures. It should also be noted that the illustrations in the figures are not necessarily true to scale.

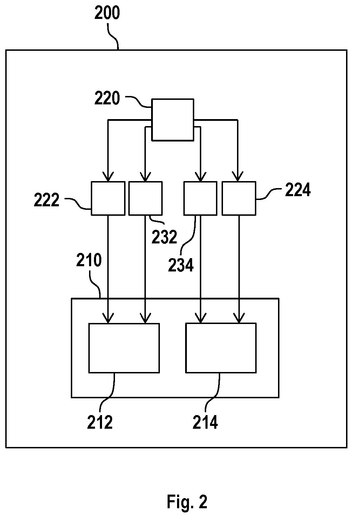

FIG. 2 shows a schematic illustration of an energy source system 200 according to a first aspect. The energy source system 200 comprises an energy source unit 210 and an energy source controller 220.

The energy source system 200 may be implemented, for example, in a stationary energy storage system or a vehicle such as a car. The car may be a regular car, a high-performance car, or a high-performance electric car. The implementation of the energy source system 200 is, however, not limited to cars. The energy source system 200 may also be used in other types of vehicles such as, but not limited to, utility vehicles (e.g., trucks, pallet carriers, tractors, excavator), aircrafts (e.g., commercial airplanes, business jets, transport aircrafts), or boats (e.g., tour boats, yachts, sail boats).

In FIG. 2, the energy source unit 210 comprises two sub-units 212, 214. In one example, the energy source unit 210 is a battery of an electric vehicle or a part of the battery. In the one example, the two sub-units 212, 214 correspond to two battery modules of the battery of the electric vehicle. Two or more battery modules may be combined to a so-called "rack". In the one example, one battery module comprises a plurality of battery cells. In the one example, one battery cell forms the smallest elementary unit for storing and providing electrical energy/power, i.e., an energy source element. In one example, a battery module comprises more than one / a plurality of clusters. A cluster may comprise at least one battery cell or a plurality of battery cells.

In another aspect, a number of battery modules may be eight or sixteen. It will be noted that the number of battery modules may be lower than eight, between eight and sixteen, or higher than sixteen.

In another aspect, two or more racks may form a stack or a stack train. The stack or the stack train may comprise a stack controller.

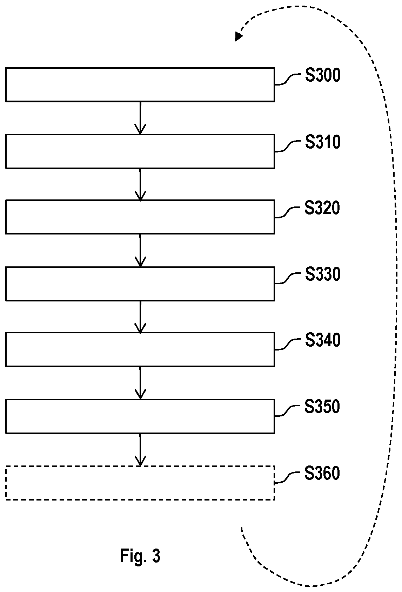

The energy source controller 220 manages and regulates the flow of electrical energy in the energy source system 200. In another example, the energy source controller 220 corresponds to a rack controller and may be considered as a top-level controller. The energy source controller 220 controls a charge and/or discharge event of the two sub-units 212, 214. In the another example, the energy source controller 220 is also configured to perform a method S for calibrating a state of charge (SOC) and/or resetting a predicted state of charge (SOC) of the energy source unit 210 during the charge or discharge event, see FIG. 3.

In another aspect, the electric vehicle may have a higher-level control system. The energy source controller 220 may be integrated into the higher-level control system. In yet another aspect, the higher-level control system may comprise a processing unit which at least partially performs the methods S. The processing unit may be connected to the energy source controller 220.

The energy source controller 220 is connected to the sub-unit 212 via a first sub-unit controller 222 and a first cluster controller 232. The energy source controller 220 is connected to the sub-unit 214 via a second sub-unit controller 224 and a second cluster controller 234. The first sub-unit controller 222 and the second sub-unit controller 224 perform the battery management of the two sub-units 212, 214. The first cluster controller 232 and the second cluster controller 234 are used for selectively switching the two sub-units 212, 214 at least temporarily in series positive and/or in series negative and/or in a positive bypass state and/or in a negative bypass state and/or in a parallel configuration state. The selectively switching of the two sub-units 212, 214 enables selectively charging or discharging based on an input provided by the energy source controller 220. The selectively switching may be executed by switching elements of a power converter module.

In another aspect, the first sub-unit controller 222, the second sub-unit controller 224, the first cluster controller 232, the second cluster controller 234, and the stack controller may be configured to perform the method S.

FIG. 3 shows a flowchart of the method S for calibrating a state of charge (SOC) and/or resetting a predicted state of charge (SOC) of the energy source unit 210 during a charge or discharge event. The method S can be used for calibrating the SOC and/or resetting the predicted SOC of the energy source unit 210 comprising at least two sub-units 212, 214. The method S may be executed, for example, for the energy source unit 210 comprising the two sub-units 212, 214, as illustrated in FIG. 2. It will be noted that the method S may be executed for any other energy source system 200 comprising the energy source unit 210 having more than two sub-units. The method S may be executed by the energy source controller 220.

The method S comprises the following steps: A first step S300 comprises providing S300 a SOC of at least one of the at least two sub-units 212, 214. A second step S310 comprises, during a charge or discharge event, selectively charging or discharging S310 the at least one of the at least two sub-units 212, 214 until a predefined charging or discharging criterion is met. A third step S320 comprises determining S320 a SOC of the at least one of the at least two sub-units 212, 214 that is reached when the predefined charging or discharging criterion is met, the determined SOC being a reset SOC. A fourth step S330 comprises resetting S330 the provided SOC of the at least one of the at least two sub-units 212, 214 based on the reset SOC, when the predefined charging or discharging criterion is met. A fifth step S340 comprises excluding S340 the at least one of the at least two sub-units 212, 214 from the charge or discharge event for which the predefined charging or discharging criterion is met. A sixth step S350 comprises charging or discharging S350 at least another one of the at least two sub-units 212, 214 until a predefined SOC is met.

The method S may further comprise a seventh step 360. The seventh step S360 comprises, during the same or another charge or discharge event, selectively discharging or charging S360 the at least one of the at least two sub-units 212, 214 for achieving a balanced SOC between the at least two sub-units 212; 214, wherein the same or the another charge or discharge event is preferably subsequent to step S350.

In another aspect, the at least one of the at least two sub-units 212, 214 may be selected randomly among all sub-units 212, 214, when the method S is performed for the first time.

In another aspect and in the case of, as described in the step S360, the selectively discharging refers to draining the at least one of the at least two sub-units 212, 214 to a greater extent, i.e., consuming electric charge and/or electrical energy at a higher rate, since the calibrated sub-unit is assumed to have the highest stored capacity of all the sub-units 212, 214. A balanced SOC between all the sub-units is thus achieved.

After the step S360, the method S can be repeated, i.e., the step S300 to S360 are repeated for successively iterating over the at least two sub-units 212, 214 to calibrate and/or reset each one of a provided SOC of the at least two sub-units 212, 214, respectively. It will be noted that the method S may already be repeated after the step S350, i.e., only the steps S300 to S350 are repeated for successively iterating over the at least two sub-units 212, 214 to calibrate and/or reset each one of a provided SOC of the at least two sub-units 212, 214, respectively.

In another example, the method S is used for calibrating a state of charge (SOC) and/or resetting a predicted state of charge (SOC) of a stationary energy storage system having two stationary energy storage modules, i.e., a first stationary energy storage module and a second stationary energy storage module during a charge event. Each of the two stationary energy storage modules has a predefined SOC for charging. The predefined SOC is, for example, set to 97% SOC for the charge event. In the first step S300, a SOC (also referred to as a provided SOC) of one of the two stationary energy storage modules is provided. In the another example, it is assumed that the first stationary energy storage module is randomly selected for being calibrated and reset first and that the provided SOC of the first stationary energy storage module is below 97% SOC before the charge event. In the second step S310, the first stationary energy storage module is charged until a predefined charging criterion is met. The predefined charging criterion corresponds, for example, to a threshold with respect to deviation of voltage over deviation of state of charge. In the another example, the SOC is determined to be 100% SOC as soon as the predefined charging criterion is reached (corresponding to step S320). As soon as the threshold with respect to deviation of voltage over deviation of state of charge is reached during the charge event of the first stationary energy storage module, the provided SOC of the first stationary energy storage module is reset to 100% SOC (step S330) and the charging of the first stationary energy storage module is stopped which corresponds to the excluding step S340. Subsequently, in the another example, the second stationary energy storage module is charged to the predefined SOC of the second stationary energy storage module (i.e., 97% SOC). Since the first stationary energy storage module exhibits 100% SOC and the second stationary energy storage module exhibits 97% SOC, a balancing between the modules is required to achieve a balance SOC between the two stationary energy storage modules. This is possible by selectively discharging the first stationary energy storage module during the next discharging event in such a manner that the provided SOC of the first stationary energy storage module and the provided SOC of the second stationary energy storage module converge resulting in a balanced SOC of the stationary energy storage system.

It is understood that the another example, as described above, may also be applied to a discharging scenario in which each of the two stationary energy storage modules has a further predefined SOC and the further predefined SOC for discharging is, for example, set to 5% SOC for the discharge event.

In another aspect, the repeating may be executed based on a repeating condition. The repeating condition may comprise a predefined number of completed charge and/or discharge events. The repeating condition may also comprise, for example, a predefined electric charge throughput and/or a predefined electrical energy throughput.

In another aspect, the predefined electric charge throughput and/or the predefined electrical energy throughput may relate to a predefined period of time of charging or discharging. The predefined period of time ensures that a required electric charge throughput and/or an electrical energy throughput is reached, which is necessary to calibrate the SOC. In other words, sufficiently long charging/discharging times may be needed for successfully repeating the method S for successively iterating over the at least two sub-units 212, 214 to calibrate and/or reset each one of the provided SOC.

In another aspect, the providing S300 comprises estimating or predicting the provided SOC of the at least one of the at least two sub-units 212, 214 by a prediction algorithm based on at least one of a measuring voltage, a measuring electric current, a coulomb counting, a temperature measuring, and a control loop, preferably the control loop 30 comprises an adaptive Kalman filter.

In another aspect, the temperature measuring may be performed on a battery-cell level to obtain individual battery-cell temperatures, which may be used for estimating the provided SOC. The temperature measuring may also be performed on a battery-module level (i.e., combined temperature of all battery cells within a battery module) to obtain a battery-module temperature which may be used for estimating the provided SOC.

In another aspect, the predefined charging or discharging criterion comprises at least one of a voltage threshold, a voltage gradient condition, a threshold with respect to deviation of voltage over deviation of state of charge, a current threshold, a current gradient condition, and a threshold with respect to deviation of charge over deviation of voltage. The above-mentioned temperature measuring may also be used as one of the charging or discharging criterion.

### LIST OF REFERENCE SIGNS

- 100: charging-discharging-diagram of a battery
- 110: charging curve
- 112: deviation of voltage over deviation of state of charge during charging
- 114: maximum state-of-charge value
- 120: discharging curve
- 122: deviation of voltage over deviation of state of charge during discharging
- 124: minimum state-of-charge value
- 200: energy source system
- 210: energy source unit
- 212: sub-unit
- 214: sub-unit
- 220: energy source controller
- 222: first sub-unit controller
- 224: second sub-unit controller
- 232: first cluster controller
- 234: second cluster controller

- S: method
- S300: method step of "providing"
- S310: method step of "selectively charging or discharging"
- S320: method step of "determining"
- S330: method step of "resetting"
- S340: method step of "excluding"
- S350: method step of "charging or discharging"
- S360: method step of "selectively discharging or charging"

## Claims

1. A method (S) for calibrating a state of charge (SOC) and/or resetting a predicted state of charge (SOC) of an energy source unit (210) during a charge or discharge event, wherein the energy source unit (210) comprises at least two sub-units (212; 214),
the method (S) comprising the following steps:
providing (S300) a SOC of at least one of the at least two sub-units (212, 214);
during a charge or discharge event, selectively charging or discharging (S310) the at least one of the at least two sub-units (212, 214) until a predefined charging or discharging criterion is met;
determining (S320) a SOC of the at least one of the at least two sub-units (212, 214) that is reached when the predefined charging or discharging criterion is met, the determined SOC being a reset SOC;
resetting (S330) the provided SOC of the at least one of the at least two sub-units (212, 214) based on the reset SOC, when the predefined charging or discharging criterion is met;
excluding (S340) the at least one of the at least two sub-units (212, 214) from the charge or discharge event for which the predefined charging or discharging criterion is met; and
charging or discharging (S350) at least another one of the at least two sub-units (212, 214) until a predefined SOC is met.

2. The method (S) according to claim 1, further comprising:
during the same or another charge or discharge event, selectively discharging or charging (S360) the at least one of the at least two sub-units (212, 214) for achieving a balanced SOC between the at least two sub-units (212; 214), wherein the same or the another charge or discharge event is preferably subsequent to step 350.

3. The method (S) according to claim 1 or 2, further comprising:
repeating steps S300 to S350 for the at least another one of the at least two sub-units (212, 214), preferably for successively iterating over the at least two sub-units (212; 214) to calibrate and/or reset each one of a provided SOC of the at least two sub-units (212, 214), respectively,
wherein the repeating is executed based on a repeating condition,
wherein the repeating condition preferably comprises a predefined number of completed charge and/or discharge events, more preferably the repeating condition comprises a predefined electric charge throughput and/or a predefined electrical energy throughput.

4. The method (S) according to claim 2, further comprising:
repeating steps S300 to S360 for the at least another one of the at least two sub-units (212, 214), preferably for successively iterating over the at least two sub-units (212; 214) to calibrate and/or reset each one of a provided SOC of the at least two sub-units (212, 214), respectively,
wherein the repeating is executed based on a repeating condition,
wherein the repeating condition preferably comprises a predefined number of completed charge and/or discharge events, more preferably the repeating condition comprises a predefined electric charge throughput and/or a predefined electrical energy throughput.

5. The method (S) according to any one of the preceding claims, wherein the resetting (S330) is performed subsequent to the charging or discharging (S350).

6. The method (S) according to any one of the preceding claims, wherein the providing (S300) comprises estimating or predicting the provided SOC of the at least one of the at least two sub-units (212, 214) by a prediction algorithm based on at least one of a measuring voltage, a measuring electric current, a coulomb counting, a temperature measuring, and a control loop, preferably the control loop comprises an adaptive Kalman filter.

7. The method (S) according to any one of the preceding claims, wherein the excluding (S340) comprises excluding the at least one of the at least two sub-units (212, 214) from the charge or discharge event, preferably immediately, after meeting the predefined charging or discharging criterion.

8. The method (S) according to any one of the preceding claims, wherein the predefined charging or discharging criterion comprises at least one of a voltage threshold, a voltage gradient condition, a threshold with respect to deviation of voltage over deviation of state of charge, a current threshold, a current gradient condition, and a threshold with respect to deviation of charge over deviation of voltage.

9. The method (S) according to any one of the preceding claims, wherein the at least two sub-units (212; 214) comprise at least two energy source modules, each of the at least two energy source modules having a plurality of energy source elements, and/or the at least two sub-units (212; 214) comprise at least two energy source elements.

10. The method (S) according to any one of the preceding claims, wherein the method (S) is initiated based on an initiation condition, preferably the initiation condition comprises a predefined number of completed charge and/or discharge events, more preferably the initiation condition comprises a predefined electric charge throughput and/or a predefined electrical energy throughput.

11. The method (S) according to any one of the preceding claims, wherein the energy source unit (210) comprising at least one power converter module, the at least one power converter module comprising at least two switching elements,
wherein the method further comprises:
selectively switching the at least one of the at least two sub-units (212; 214) with respect to the at least another one of the at least two sub-units (212; 214), preferably during the charge or discharge event, for selectively charging or discharging the at least one of the at least two sub-units (212; 214).

12. An energy source system (200) for calibrating a state of charge (SOC) and/or resetting a predicted state of charge (SOC), the energy source system (200) comprising:
an energy source unit (210) comprising at least two sub-units (212; 214),
at least one power converter module comprising at least two switching elements,
wherein the at least two switching elements being configured for selectively switching each one of the at least two sub-units (212; 214) at least temporarily in series positive and/or in series negative and/or in a positive bypass state and/or in a negative bypass state and/or in a parallel configuration state;
an energy source controller (220) for controlling a charge and/or discharge event of the at least two sub-units (212; 214), the energy source controller (220) being configured to perform the steps of:
providing a SOC of at least one of the at least two sub-units (212, 214);
during a charge or discharge event, by the at least two switching elements, selectively charging or discharging the at least one of the at least two sub-units (212, 214) until a predefined charging or discharging criterion is met;
determining a SOC of the at least one of the at least two sub-units (212, 214) that is reached when the predefined charging or discharging criterion is met, the determined SOC being a reset SOC;
resetting the provided SOC of the at least one of the at least two sub-units (212, 214) based on the reset SOC, when the predefined charging or discharging criterion is met;
excluding, by the at least two switching elements, the at least one of the at least two sub-units (212, 214) from the charge or discharge event for which the predefined charging or discharging criterion is met; and
charging or discharging, by the at least two switching elements, at least another one of the at least two sub-units (212, 214) until a predefined SOC is met.

13. A processing unit or an energy source controller (220) or a sub-unit controller (222; 224) or a cluster controller (232; 234) or a stack controller configured to perform the method (S) according to any one of claims 1 to 11.

14. A stationary energy storage system or a vehicle comprising an energy source system (200) for calibrating a state of charge (SOC) and/or resetting a predicted state of charge (SOC) according to claim 12 and/or a processing unit or an energy source controller (220) or a sub-unit controller (222; 224) or a cluster controller (232; 234) or a stack controller according to claim 13.

15. A computer program product comprising instructions which, when the program is executed by a processing unit, cause the processing unit to perform the method (S) according to any one of claims 1 to 11.

16. A computer-readable storage medium having stored thereon the computer program product of claim 15.
